(19) Europäisches Patentamt
European Patent Office
Office européen des brevets

(11) **EP 2 648 325 A2**

(12) **EUROPÄISCHE PATENTANMELDUNG**

(43) Veröffentlichungstag:
**09.10.2013 Patentblatt 2013/41**

(51) Int Cl.:
***H02M 5/00*** *(2006.01)*

(21) Anmeldenummer: **13001671.0**

(22) Anmeldetag: **02.04.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.04.2012 DE**

(71) Anmelder: **aizo GmbH**
**35578 Wetzlar (DE)**

(72) Erfinder: **Deckers, Volker**
**8052 Zürich (CH)**

(54) **Halbleiter-Netzteil-Komparator**

(57) Die Erfindung betrifft eine elektronische Schaltung zur Versorgung von weiteren elektronischen Schaltungen welche zwischen Eingangsseite und Ausgangsseite eine Schaltung umfasst unter einem Zusammenwirken, von einer Ladekapazität mindestens einem Transistor, eine Stromquelle, einer Steuerungsschaltung, Vorwiderständen, Dioden, wobei zwischen dem in Basisschaltung betriebenen Transistor und der Eingangsspannung eine Diode D1 angeordnet ist und wobei die Sourceseite des Transistors mit der Stromquelle CM verbunden ist und die Stromquelle mit der Ladekapazität CLoad verbunden ist, und wobei an der Ladekapazität eine geregelte Spannung bereitgestellt wird und wobei die Steuerschaltung die Stromquelle CM mit Regelinformationen versorgt und wobei die von der Stromquelle CM bereitgestellte Spannung, um eine elektronische Schaltung bereitzustellen, welche wie z.B. ein Netzteil wirkt, welche wiederum selbst zur Energieversorgung von elektronischen Schaltungen geeignet ist, mit Hilfe eines Komparators (203a, 203b) überwacht wird.

Fig. 5

EP 2 648 325 A2

## Beschreibung

Die Erfindung betrifft einen Komparator für ein Halbleiternetzteil.

## Stand der Technik

Handelsübliche Netzteile nutzen oftmals einen Transformator. Ein Transformator bewirkt erstens eine galvanische Trennung zwischen Eingangsseite und Ausgangsseite und zweitens für die Reduzierung der Spannung der Eingangsseite, sowie einen stabilen Spannungspegel auf der Ausgangsseite.

Die Größe des Netztransformators wird hierbei in erster Linie von der übertragenen Leistung bestimmt, sowie von der Übertragungsfrequenz. Bei normalen Netzteilen entspricht die Übertragungsfrequenz der Netzfrequenz (z.B. 50 Hz oder 60 Hz). Bei getakteten Netzteilen entspricht die Übertragungsfrequenz oftmals einer höheren Frequenz (z.B. 30 - 300 kHz).

Aufgabe ist es diese Nachteile aus dem Stand der Technik zu vermeiden und eine elektronische Schaltung, welche wie z.B. ein Netzteil wirkt, bereitzustellen, welche wiederum selbst zur Energieversorgung von elektronischen Schaltungen geeignet ist und welche darüber hinaus einen kleinstmöglichem Bauraum aufweist und vorzugsweise außerdem noch geeignet ist, Halbleiter zu versorgen bzw. auf- bzw.- in Halbleitern integriert zu werden.

Gelöst wird diese Aufgabe durch die unabhängigen Ansprüche. Ausgestaltungsformen gehen aus den Unteransprüchen hervor.

## Beschreibung

Insbesondere wird die Aufgabe gelöst durch eine elektronische Schaltung zur Versorgung von weiteren elektronischen Schaltungen welche zwischen ihrer Eingangsseite und ihrer Ausgangsseite eine Schaltung umfasst unter einem Zusammenwirken, von mindestens einer Ladekapazität ($C_{Load}$), mindestens einem Transistor ($T_{Load}$), mindestens eine Stromquelle (CM), mindestens einer Steuerungsschaltung, Vorwiderständen, Dioden, wobei zwischen dem in Basisschaltung betriebenen Transistor ($T_{Load}$) und der Eingangsspannung eine Diode D1 angeordnet ist und wobei die Sourceseite des Transistors ($T_{Load}$) mit der Stromquelle CM verbunden ist und die Stromquelle mit der Ladekapazität ($C_{Load}$) verbunden ist, und wobei an der Ladekapazität ($C_{Load}$) eine geregelte Spannung bereitgestellt wird und wobei die Steuerschaltung die Stromquelle CM mit Regelinformationen versorgt und wobei die von der Stromquelle CM bereitgestellte Spannung z.B. VKK mit Hilfe eines Komparators überwacht wird, wobei dieser Komparator sowohl anspricht, wenn ein maximaler Spannungswert überschritten ist, als auch wenn ein minimaler Spannungswert unterschritten ist und wobei diese Stromquelle CM, wenn die geregelte Spannung an der Ladekapazität $C_{Load}$ einen oberen Schwellwert überschreitet, diese Ladekapazität $C_{Load}$ zusammen mit dem Transistor ($T_{Load}$) mit Hilfe der Steuerschaltung ST1 abregelt, und wenn diese geregelte Spannung an der Ladekapazität $C_{Load}$ eine untere Schwelle unterschreitet, die Ladekapazität $C_{Load}$ auflädt.

Eine derart aufgebaute Schaltung unterscheidet sich von herkömmlichen Schaltungen insbesondere dadurch, dass im Stand der Technik üblicherweise Strom über die gesamte Sinuswelle genutzt wird, wozu dann auch das Maximum der Sinuswelle gehört. Deswegen müssen jedoch entsprechend hoch dimensionierte Bauelemente eingesetzt werden, was gleichbedeutend ist, mit einer relativ großen Baugröße und einem begrenzten Wirkungsgrad.

Erfindungsgemäß wird mit Hilfe der in Folge vorgestellten Schaltung nicht die gesamte Sinuswelle genutzt. Insbesondere werden erfindungsgemäß das Maximum der Sinuswelle und die Teile um das Maximum herum nicht genutzt. Wie groß der nicht genutzte Teil der Sinuswelle ist, kann erfindungsgemäß mit Hilfe einer Steuerung / Steuerschaltung gezielt eingestellt werden.

Im Standardfall, wenn die gesamte Sinuswelle genutzt wird, ist genau deswegen die Verlustleistung, besonders groß. Weil die Verlustleistung besonders groß ist, müssen wiederum die Bauteile entsprechend groß dimensioniert werden, um diese Verlustleistung verarbeiten zu können.

Aufgrund der erfindungsgemäßen Schaltung und ihrem erfindungsgemäßen Betrieb wird die Verlustleistung reduziert. Insbesondere indem erfindungsgemäß die Bereiche um das Maximum herum ausgenommen werden, kann hierdurch die Verlustleistung signifikant reduziert werden. Wenn darüber hinaus insbesondere die Bereiche um die Nulldurchgänge genutzt werden, kann die Verlustleistung noch weiter reduziert werden. Dies hat wiederum zur Folge, dass bei geringer Verlustleistung, also bei einer verbesserten Effizienz nicht nur zahlenmäßig weniger Bauteile verwendet werden müssen, sondern auch dass diese Bauteile nur für geringe Leistungen ausgelegt werden brauchen, was daher den Einsatz nicht nur von weniger Bauteilen, sondern auch von kleineren Bauteilen erlaubt.

Abhängig von den mit Hilfe der Steuerschaltung eingestellten Werten wird definiert, welche Bereiche der Sinuswelle genutzt werden. Zugleich wird damit auch definiert, welche maximale Dimensionierung die zu verwendenden Bauelemente aufweisen müssen. Im vorliegenden Fall können die Bauelemente der Schaltung daher sogar so klein und damit platzsparend dimensioniert werden, dass sie nur einen minimalen Bauraum benötigen und hierdurch in einen Chip integriert werden können.

In der in Folge vorgestellten erfindungsgemäßen elektrischen Schaltung ist die darin enthaltene Ladekapazität das vom Volumen her gesehen "größte" Bauteil. Die Leistungsfähigkeit der erfmdungsgemäßen Schaltung wird wiederum über die Größe dieser Kapazität definiert.

Aufgrund dieses Konzepts ist es möglich, eine elektrische Schaltung aufzubauen, welche eingangsseitig unmittelbar an die Netzspannung anschließbar ist und ausgangsseitig eine stabile Niedervoltspannung bereitstellt, und hierbei ohne $C_{Load}$ einen Bauraum von um die 2mm² aufweist und hierbei außerdem als Ganzes und in seinen Einzelteilen ohne zusätzliche Kühlelemente auskommt.

Ein derart erfindungsgemäß miniaturisiertes Netzteil kann aufgrund der beschriebenen minimierten Verlustleistung in einen Halbleiter-Chip integriert werden und diesen wiederum mit Energie versorgen. Dies hat zur Folge, dass sogar ein derart aufgebauter Chip von außen betrachtet direkt an die Netzspannung angeschlossen werden kann.

Eine derart aufgebaute Schaltung unterscheidet sich von herkömmlichen Schaltungen auch dadurch, dass im Stand der Technik der Strom in den Ladekondensator üblicherweise mit einem Transistor oder einem anders gearteten Schaltelement ein- und ausgeschaltet wird.

Abgrenzend hierzu wird mit Hilfe der in Folge vorgestellten Schaltung der Strom mit einer Kombination aus einem Transistor, insbesondere einem Leistungstiansistor $T_{Load}$, und einer gesteuerten Stromquelle ab- bzw. aufgeregelt, was unter anderem zu einer starken Verringerung der hochfrequenten Rückwirkung in das Netz führt. Dadurch kann dann der zusätzlich nötige Aufwand zur Erlangung einer Konformität mit den gesetzlichen Vorschriften bezüglich der Abstrahlung von elektromagnetischer Energie (EMV Richtlinien) und damit die Kosten und die Baugröße der Elektronik sehr stark verringert werden.

Hierfür umfasst die elektronische Schaltung zur Versorgung von weiteren elektronischen Schaltungen zwischen ihrer Eingangsseite und ihrer Ausgangsseite wiederum selbst eine elektronische Schaltung, die wiederum mindestens einen Transistor ($T_{Load}$) aufweist, wobei der Transistor mit weiteren Komponenten, wie z.B. einer Ladekapazität ($C_{Load}$), einer Stromquelle (CM), einer Steuerungsschaltung und Vorwiderständen und Dioden zusammenwirkt.

Da der Transistor ($T_{Load}$) unmittelbar an die Netzspannung angeschlossen werden kann, wird bevorzugt eine entsprechend spannungsfeste Version verwendet werden. Beispielhaft kann dafür ein Hochvolt-Power MOSFET verwendet werden, z.B. in der Ausgestaltungsform mit einer Spannungsfestigkeit zwischen Source und Drain von 500V.

Gegenstand der Erfindung ist damit eine elektronische Schaltung zur Versorgung weiterer elektronischer Schaltungen. Insbesondere ist hierunter eine elektronische Schaltung zu verstehen, welche die Funktion eines Netzteils aufweist, also eine Schaltung deren eines Ende (Eingangsseite) mit einer Netzspannung (z.B. 230 Volt bzw. 110 Volt) verbunden ist und deren anderes Ende (Ausgangsseite) eine definierte Spannung zum Betrieb von insbesondere Halbleitern bereitstellt (z.B. 5 Volt, bzw. 3,3 Volt). Die Schaltung kann jedoch auch dann eingesetzt werden, wenn deren eines Ende (Eingangsseite) eine andere Wechselspannung aufweist, als eine der bekannten Netzspannungen, wobei deren anderes Ende (Ausgangsseite) die erwähnte definierte Spannung zum Betrieb von Halbleitern bereitstellt (z.B. 5 Volt, bzw. 3,3 Volt). Selbstverständlich kann der Fachmann mit dieser Schaltung ausgangsseitig in jedem Fall auch andere Spannungen, als die üblicherweise zum Betrieb von Halbleitern verwendeten bereitstellen.

Diese elektronische Schaltung zur Versorgung weiterer elektronischer Schaltungen wird vorliegend bevorzugt als "Halbleiter-Netzteil" bezeichnet, weil sie die gleiche Wirkung bereitstellt, wie ein Netzteil und weil sie einerseits zum Betrieb von Halbleitern ausgelegt ist und anderseits wiederum selbst ihre Funktion durch den weitgehenden Einsatz und Betrieb geeigenter Halbleiter bereitstellt bzw. bis auf die Ladekapazität in Teilen oder komplett auf einem Chip integriert werden kann.

Ein zentrales Bauteil der erfindungsgemäßen Schaltung ist die Ladekapazität $C_{Load}$. Bei der Ladekapazität $C_{Load}$ handelt es sich bevorzugt um einen Kondensator, insbesondere um einen Keramik- oder Tantal-Kondensator mit einer zulässigen Betriebsspannung von z.B. bevorzugt bis um die 35V. Besonders gute Erfahrungen wurden mit einem Niedervolt-Kondensator vom Typ 25V aus keramischem Material gemacht. Größere Kondensatoren aus Tantal weisen außerdem den Vorteil auf, dass die Kapazität nahezu unabhängig von der Momentanspannung ist.

Die Ladekapazität $C_{Load}$ wird erfindungsgemäß über den Transistor $T_{Load}$ und über die in Folge noch näher zu beschreibende Stromquelle CM in der Nähe des Nulldurchgangs der Netz-Sinus-Spannung während der positiven Halbwelle des Netz-Sinus der Kondensator $C_{Load}$ aufgeladen. Diese Aufladung erfolgt in einer positiven Halbwelle bevorzugt zwei Mal, nämlich, einmal bei steigender Sinuskurve der positiven Halbwelle und einmal bei fallender Sinuskurve der positiven Halbwelle.

Die Ladekapazität CLoad wird hierfür bevorzugt in den Phasen der Eingangsspannung geladen, bei welchen die Eingangsspannung noch relativ klein ist, was insbesondere in der Nähe des Nulldurchgangs der Fall ist. Es kommt in diesem Fall pro Sinushalbwelle jeweils zweimal zu einer Ladephase bei der die erwähnte Stromquelle leitend geschaltet ist und so Strom in den Kondensator fließen kann.

Durch Verwenden der Ladephase in der Nähe des Nulldurchgangs ist die Verlustleistung über die Transistoren im Strompfad sehr gering.

An $C_{Load}$ entsteht hierdurch eine geregelte Spannung VKK die dann von einem weiteren analogen Regler (der auch Teil von Block 2, also der 2. Steuerschaltung sein kann) in eine enger tolerierte Betriebsspannung VCC umgewandelt werden kann. VCC wiederum ermöglicht dann aufgrund ihrer so erreichten Stabilität problemlos die Versorgung und den Betrieb von Halbleitern, die hierfür an VCC anschließbar sind.

Zwar könnte die Ladekapazität $C_{Load}$ zu jedem Zeitpunkt der positiven Sinushalbwelle geladen werden, allerdings würde dabei die Verlustleistung über $T_{Load}$ und CM zum Sinusmaximum hin immer größer. Die Bauelemente der Schaltung müßten entsprechend groß ausgelegt werden, wenn die Schaltung auch im Bereich um das Sinusmaximum herum betrieben würde. Die erfindungsgemäße Schaltung verwendet daher bevorzugterweise nicht die gesamte Sinuswelle, sondern nur einen Teil derselben (z.B. bis zu 20%), wie z.B. den Teil um die Nulldurchgänge herum.

Dadurch, dass jedoch erfindungsgemäß der Ladezeitraum der Ladekapazität $C_{Load}$ vom Maximum der Sinushalbwelle beabstandet liegt und sich insbesondere bevorzugt in der Nähe des Nulldurchgangs befindet, kann wiederum die Betriebsspannung der betreffenden Bauteile gering gehalten werden, was wiederum die Verwendung von Bauteilen von geringer Größe erlaubt. Gute Erfahrungen wurden mit Spannungen der Sinuswelle von bis zu um die 80 Volt gemacht. Im Folgenden wird daher das erfindungsgemäße Prinzip beispielhaft an diesem Wert dargestellt, ohne dass dies hieße, dass der Fachmann je nach seiner Zielsetzung nicht auch andere Werte in Betracht ziehen würde.

Diese Trennung der maximal erwünschten Spannung von der Sinuskurve wird durch einen Transistor ($T_{Load}$) erreicht. Als hierfür geeigneter Transistor ($T_{Load}$) kommt insbesondere ein Power-MOSFET, bzw. ein IGBT bzw. ein alternatives Bauelement in Betracht, welche vergleichbare Eigenschaften aufweist. Besonders gute Erfahrungen wurden mit einem Power-MOSFET gemacht. Bei der Verwendung eines diskreten Transistor ($T_{Load}$) lässt sich die erfindungsgemäße Schaltung diskret auf ca. 150 mm2 aufbauen (für z.B. eine Imax = 100mA und Vout= 12 V), was einen wichtigen Beitrag für die aufgabengemäß gewünschte Miniaturisierung der Energieversorgung von Halbleitern leistet.

Dieser Transistor ($T_{Load}$) wird wiederum bevorzugt in einer Basisschaltung betrieben; bzw. wenn es sich um einen FET handelt, analog in einer Gateschaltung. Auf diese Weise kann sichergestellt werden, dass die in Folge noch weiter zu beschreibende Wirkung erzielt werden kann, dass der Transistor auf der Spannung der Stromquelle "schwimmt".

Die Source S von $T_{Load}$ des Transistor ($T_{Load}$) ist erfindungsgemäß mit einer (vorzugsweise gesteuerten) Stromquelle CM verbunden, die als Stromspiegel wirken kann. Die Gate wird bevorzugt über einen Widerstand (R1) und mit einer Diode (Z1) auf einer konstanten Spannung gehalten. Wenn kein Strom zwischen $T_{Load}$ und der (vorzugsweise gesteuerten) Stromquelle CM fließt, fällt praktisch die gesamte Eingangsspannung an $T_{Load}$ ab.

Die Stromquelle CM wiederum ist auf diese Weise durch den in Gateschaltung betriebenen Transistor ($T_{Load}$) geschützt, denn wenn die Stromquelle abgeregelt ist, fällt der größte Teil der Eingangsspannung über den Transistor ($T_{Load}$) ab. Die Stromquelle wird daher bevorzugt dergestalt betrieben, dass der Stromfluss sofort auf Null herunter moduliert wird, wenn die maximal zulässige Spannung des Kondensators $C_{Load}$ erreicht ist. Durch die Steuerung (Block 2) wird dabei sichergestellt dass die Ein/Ausschaltflanken des Stroms gemäß einer $sin^2$ Kurvenform verlaufen.

Bei der Stromquelle CM handelt es sich insbesondere um eine dem Fachmann aus anderen Zusammenhängen prinzipiell bekannte "gesteuerte Stromquelle". Im vorliegenden Fall wird beispielhaft eine Stromquelle eingesetzt, die unter Verwendung einer Stromspiegelschaltung einen hohen Stromverstärkungsfaktor aufweist. Dadurch kann die Steuerlogik (Block 201) einen entsprechend geformten Steuerstrom erzeugen ohne dass deren geregelte Spannungsversorgung mit einem übermäßig Strom belastet wird.

Diese (gesteuerte) Stromquelle CM umfasst z.B. selbst wiederum mehrere Transistoren, (z.B. Niedervolttransistoren), sowie einen Niedervolt-Leistungstransistor, durch den der gesamte Strom fließen kann.

Im Fall, dass der Fachmann einen einfachen Widerstand zur Strombegrenzung statt der Stromquelle verwendet wäre es nicht möglich, die Kontur des Stromimpulses zu formen/gestalten. Diese erfindungsgemäß realisierte geformte/gestaltete Kontur hingegen ist es, welche einen erheblichen Beitrag zur Reduktion der EMV-Belastung liefert und damit die Einhaltung der EMV Vorschriften sicherstellt. Zur Gestaltung der Kontur des Stromimpulses wird die Stromquelle mit Hilfe der erfindungsgemäßen Schaltung bevorzugt direkt gesteuert. Der in Basisschaltung betriebene Transistor z.B. trennt dann die Stromquelle von der hohen Netzspannung und macht diese dergestalt netzspannungsfest.

Über die Stromquelle CM wird damit der Niedervolt-Kondensator $C_{Load}$ direkt aus dem Netz aufgeladen. Der Kondensator CM würde andernfalls zerstört, sobald er von der Netzspannung oberhalb seiner maximal zulässigen Betriebsspannung aufgeladen würde. Die Stromquelle CM ist jedoch wie erwähnt durch den bevorzugt in Basisschaltung betriebenen Transistor ($T_{Load}$) (bzw. einem in Gateschaltung betriebenen FET) geschützt.

Die Stromquelle CM wird bevorzugt dergestalt betrieben, dass der Stromfluss sofort abgeregelt werden kann, wenn die maximal zulässige Spannung des Kondensators erreicht ist. Der Niedervolt Kondensator dient hierdurch als Energiereservoir für die daran angeschlossene Niedervoltelektronik (Nutzschaltung, z.B. Halbleiter-Chips).

Den Steuerschaltungen kommt insbesondere die Aufgabe zu, die Stromquelle CM zu an- bzw. abzuregeln.

Als einfachst mögliche Steuerschaltung kann im vorliegenden Fall eine pegelgesteuerte Steuerschaltung Verwendung finden. Als Stellgrößen können dann beispielsweise fixe Spannungswerte aus dem Netz verwendet werden, wie z.B. die erwähnten ca. 80 Volt der Sinuskurve.

Schon eine derartige einfache Steuerung stellt dann die Möglichkeit bereit, den Strom durch CM mittels eines eingeprägten Stroms analog an- oder abzuregeln, um z.B. bestimmte Pulsformen des Stroms zu erzwingen. In diesem zweiten Fall wird die Stromquelle CM dann wie erwähnt bevorzugt als Stromspiegel mit einem hohen Stromverstärkungsfaktor betrieben.

Zur Steuerung können aber auch verschiedene Kriterien einzeln oder in Kombination Verwendung finden. Zu diesen Kriterien gehören z.B. Zeitgeber, die jeweils vom Nulldurchgang jeder Netz-Sinuswelle gestartet werden.

Bevorzugt handelt es sich bei der Steuerschaltung jedoch um zwei Steuerschaltungen, wobei eine erste Steuerschaltung (201) die Stromquelle in der Anlaufphase der Schaltung steuert und zwar bevorzugt bis zu dem Zeitpunkt, dass sämtliche Bauelemente der Schaltung ihren Betriebszustand erreicht haben, was erfahrungsgemäß ca. 2-3 Sinushalbwellen Zeit benötigt

Eine zweite Steuerschaltung (202) ersetzt dann die erste Steuerschaltung ab dem Zeitpunkt, dass die Bauelemente der Schaltung ihren Betriebszustand erreicht haben. Dies ist dann bevorzugterweise auch der Zeitpunkt sein, zu welchem die Stromquelle z.B. über einen $\sin^2$ Generator so gesteuert wird, sodass die Pulsform des Ladestroms einer $\sin^2$ Form folgt. Eine dritte elektronische Schaltung, die z.B. Teil der Steuerung (202) sein könnte, kann die Aufgabe übernehmen, eine ungeregelte Spannung VKK an der Ladekapazität z.B. mit einem analogen Regler in eine gesteuerte Betriebsspannung VCC auf der Ausgangsseite umzuwandeln.

Den Vorwiderständen und Dioden kommt wiederum die Aufgabe zu, die Ströme zu begrenzen bzw. Ströme in ihrer Richtung zu lenken, sodass die beschriebenen Bauelemente zerstörungsfrei betrieben werden können.

Durch die Verwendung der beschriebenen Bauelemente und durch den beschriebenen Betrieb dieser Bauelemente kann ein sehr preisgünstiger Niedervoltkondensator als Energiespeicher (Ladekapazität $C_{Load}$) verwendet werden. Bei niedrigem Spannungsrating kann ein solcher Kondensator sehr klein gehalten werden. Auch der zum beschriebenen Betrieb erforderliche Hochvolt-Transistor und die Stromquelle können somit klein und kostengünstig gehalten werden.

Im Betrieb der Schaltung wird die Energie, die im Kondensator $C_{Load}$ gespeichert wird, durch den Innenwiderstand des Transistors und durch die Stromquelle im leitenden Zustand, sowie durch den Innenwiderstand des Kondensators und durch dessen Kapazität, sowie durch die Zeitdauer der Ladephase begrenzt. Der Transistor $T_{Load}$ und die Stromquelle CM wird gemäß dem Strombedarf groß genug ausgelegt, um den in diesem Zeitraum fließenden Strompuls leiten zu können.

Insbesondere ist zwischen dem in Basisschaltung bzw. in Gateschaltung betriebenen Transistor ($T_{Load}$) und der Eingangsspannung, welche oftmals die Netzspannung ist, eine Diode (z.B. eine Gleichrichterdiode) angeordnet, wobei die Sourceseite dieses Transistors ($T_{Load}$) mit der erwähnten Stromquelle CM verbunden ist und die Stromquelle mit der Ladekapazität $C_{Load}$ verbunden ist, und wobei an der Ladekapazität ($C_{Load}$) eine dadurch geregelt Spannung VKK bereitgestellt wird und wobei die Steuerschaltung die Stromquelle CM mit Regelinformationen versorgt.

Hierbei kommt im Falle des Einsatzes eines Transistors als $T_{Load}$ bevorzugt eine Basisschaltung und im Falle des Einsatzes eines Feldeffekttransistors (FET) als $T_{Load}$ bevorzugt eine Gateschaltung zum Einsatz.

Ein derartiges Zusammenwirken der Bauelemente bewirkt, dass in den Phasen geringer Spannung rund um den Eingangsspannungsnulldurchgang der Niedervoltkondensator über die Stromquelle $C_{Load}$, die direkt mit dem Netz verbunden ist, aufgeladen wird. Der Transistor ($T_{Load}$) trennt dann die Stromquelle vom Netz, wenn die Netz-Spannung einen vordefinierten Wert überschreitet wird (z.B. > 80V).

Mit Hilfe von TLoad erhält die Stromquelle CM eine ausreichende Spannungsfestigkeit um direkt am Netz angeschlossen zu werden.

Die Gate G von $T_{Load}$ wird bevorzugt über einen hochohmigen Widerstand (vorliegend der Widerstand R1), weit aufgesteuert wobei eine Diode, bevorzugt eine Zenerdiode Z1, die Gatespannung begrenzt. Diese Diode kann auch als Gleichrichterdiode wirken. Diese Diode (Gleichrichterdiode) schützt in diesem Fall auch vor negativen Spannungen.

Die Stromquelle CM wird wiederum zumindest beim Anfahren der Schaltung über eine Steuerung (vgl. Block 201) angesteuert.

Die Steuerung der Ladeimpulse über die Stromquelle CM wird zumindest beim Anfahren wie erwähnt von einem Steuerelement (vgl. Block 201) übernommen.

Zur Steuerung kann in der Betriebsphase dann auch gehören, dass z.B. das Signal eines Komparators die vollständige Ladung von $C_{Load}$ anzeigt.

Die Spannung am Kondensator $C_{Load}$ kann in der Betriebsphase dann durch eine Spannungs-Überwachungsschaltung gemessen werden. Wenn dann ein bestimmter maximaler Wert überschritten ist, oder wenn ein minimaler Wert unterschritten ist, spricht der Komparator, an. Dieser Komparator kann aus einem einzigen Komparator bestehen, der sowohl verhindert, dass eine maximale Spannung überschritten wird, als auch dass die minimale Spannung unterschritten wird oder er kann aus zwei Komparatoren bestehen, von welchen einer verhindert, dass die maximale Spannung überschritten wird und der andere verhindert, daß die minimale Spannung unterschritten wird.

In letzterem Fall würde dieser eine separate Spannung (wieso eine separate Spannung, ist es nicht die selbe Spannung, nur eben der untere Wert dieser selben Spannung?) überwachen. In der Steuereinheit wird beim Überschreiten des Wertes an das Laden sin2-förmig beendet. Mittels des für die minimale Spannung zuständigen Komparators und der Steuereinheit kann das Laden nur dann gestartet werden, wenn die Spannung an VKK unterhalb einen Minimalwertes liegt. Weiterhin ist es so möglich, dass die Vergleichswerte von Komparator für die maximal zulässige Spannung und Komparator für die minimal zulässige Spannung einzeln für beide Ladepulse/-fenster konfigurierbar sind (wie erfolgt bitte diese Konfiguration?).

Die Überwachung sowohl der maximal zulässigen, als auch der minimal zulässigen Spannung hat zur Folge, dass nur geladen wird, wenn es wirklich nötig ist. Hierdurch damit die Effizienz und die EMV Abstrahlung der Schaltung wesentlich optimiert werden, weil die EMV signifikant, also um über 50% reduziert werden kann.

Der für die maximale Spannung zuständige Komparator bewirkt z.B., dass der Ladeprozess abgeregelt wird, sobald ein oberer Schwellwert erreicht wird und der für die maximale Spannung zuständige Komparator bewirkt z.B., dass bei Unterschreitung eines unteren Schwellwertes am Ladekondensator der Ladeprozess innerhalb der Ladefenster freigegeben wird.

Der Signalausgang des Komparators steuert dann die Stromquelle so an, dass der Ladestrom abgeschaltet wird und der Transistor $T_{Load}$ in einen nicht leitenden Zustand übergeht.

Wenn die Sourceseite des Transistors ($T_{Load}$) mit dieser Stromquelle verbunden ist, fließt dann abhängig von der Steuerung Strom von der Eingangsseite über den Transistor ($T_{Load}$) und über die Stromquelle in die Ladekapazität ($C_{Load}$) und lädt diese auf.

Wenn darüber hinaus dann die Stromquelle CM zusammen mit dem Transistor ($T_{Load}$) die Schaltung ab einem definierten Ladezustand der Ladekapazität $C_{Load}$ vom Netz (z.B. 220 Volt bzw. 110 Volt) trennt und unterhalb des definierten Ladezustands der Ladekapazität diese auflädt, wird hierdurch auf der Ausgangsseite eine für die Versorgung von elektronischen Schaltungen geeignete Spannung VKK bereitgestellt.

Beziehungsweise die Stromquelle CM kann, wenn die besagte geregelte Spannung an der Ladekapazität CLoad einen oberen Schwellwert überschreitet, diese Ladekapazität $C_{Load}$ zusammen mit dem Transistor ($T_{Load}$) und damit die sie umgebende Schaltung auf Basis einer vorgegebenen Kurve von der Eingangsseite mit Hilfe des Einsatzes der Steuerschaltung abregeln.

Wenn die besagte geregelte Spannung an der Ladekapazität $C_{Load}$ dann eine untere Schwelle unterschreitet, wird diese Ladekapazität $C_{Load}$ dann z.B. mit Hilfe von geformten Ladeimpulsen aufgeladen.

Hierdurch wird auf der Ausgangsseite eine für die Versorgung von elektronischen Schaltungen geeignete Spannung bereitstellt. Auf diese Weise können die Ladeimpulse außerdem auch so geformt werden, dass sie EMV-optimiert sind. Diese EMV-Optimierung wird insbesondere dadurch erreicht, dass die Hüllkurve der Stromimpulse, also die Gestalt der Stromimpulse, in behutsamer Weise ihren Betrag über die Zeit ändert. Hierdurch wird die Stromamplitude gemäß einer $Sin^2$-Gestalt geformt. Bevorzugt läuft diese Stromamplitude mit ihrer $Sin^2$-Gestalt durch den Nullpunkt.

Die Stromquelle CM wird daher im Fall, dass die geregelte Spannung an der Ladekapazität $C_{Load}$ einen oberen Schwellewert überschreitet, zusammen mit dem Transistor ($T_{Load}$) angeregt. Damit wird auch die gesamte Schaltung von der Eingangsseite abgeriegelt. Diese Abriegelung erfolgt mit Hilfe einer vorgegebenen Kurve Diese vorgegebene Kurve wiederum stammt aus einer separaten Steuerschaltung.

Im alternativen Fall, wenn diese geregelte Spannung an der Ladekapazität $C_{Load}$ eine untere Schwelle unterschreitet, wird die Ladekapazität aufgeladen.

VKK folgt aufgrund dieser Prinzipien bei eingeschaltetem Stromfluss abhängig von der Netz-Sinus-Spannung einer kapazitiven Ladekurve und bei abgeschaltetem Stromfluss einer kapazitiven Entladekurve. Die Spannung VKK wird dabei von der oben beschriebenen Wirkweise innerhalb eines maximalen und minimalen Werts gehalten, z.B. zwischen 10V und 22V. Zur Realisierung dieses Konzepts können auch elektronische Schaltungen genutzt werden, welche dem Fachmann bekannt sind.

Die vorliegende Erfindung stellt damit eine Schaltung vor, die bei gleicher Funktion nur einen sehr kleinen Platzbedarf benötigt, sowohl in der Fläche, als auch in der Bauhöhe. Das größte elektronische Bauteil in einer derartigen Schaltung ist die Ladekapazität $C_{Load}$, deren Größe sich wiederum aus dem Leistungsbedarf der versorgten Schaltung ergibt.

Somit ist der wesentliche Vorteil dieser Schaltung ein praktisch zu vernachlässigender Platzbedarf und die sehr geringen Kosten in der Massenherstellung. Dies gilt vor allem dann, wenn für eine Applikation ein analoger oder "Mixed-Mode" Custom-Chip hergestellt werden soll, der sowohl die erfindungsgemäße Schaltung umfasst, als auch einen Chip, der von der erfindungsgemäßen Schaltung mit Energie versorgt wird.

Im Vergleich mit einem getakteten Netzteil braucht es erfindungsgemäß auch keinen Transformator oder größere Hochvolt-Kondensatoren verwendet, um eine eingangsseitige Netzspannung auf eine ausgangsseitige Spannung herunterzuregeln, mit der Halbleiter stabil betrieben werden können, wodurch deren Bauraum und deren Kosten eingespart werden.

Für die Erzeugung einer gesteuerten Spannung mit einer Leistung von 0,2 Watt genügt zum Beispiel ein Kondensator der Größe 1208 (=3,2 x 2,5 mm). Die gesamte Elektronik für die Umsetzung der Erfindung nimmt dann auf einem integrierten Schaltkreis nur einige wenige Quadratmillimeter ein.

Moderne Hochvolt-Halbleiterprozesse erlauben auch die kostengünstige Herstellung von Chips, welche eine derartige Spannungsversorgung integriert haben.

Wenn darüber hinaus eine derartige elektronische Schaltung auf der Ausgangsseite der elektronischen Schaltung Spannungswerte bereitstellt, die zum Betrieb von Halbleitern und/oder diskreten elektrischen Niedervolt-Schaltungen unmittelbar geeignet sind, bewirkt dies, dass derartige Halbleiter und/oder diskrete elektrische Niedervolt-Schaltungen stabil mit elektrischer Energie versorgt werden können.

Die zum Betrieb von Halbleitern und/oder diskreten elektrischen Niedervolt-Schaltungen gängigen Werte betragen bevorzugt um die 5 Volt (insbesondere 5 Volt) bzw. um die 3,3 Volt (insbesondere 3,3 Volt).

Solche Spannung können aus VKK mittels bekannter z.B. analoger Spannungsregler erstellt werden. Damit ist es möglich ein erfindungsgemäßes Netzteil aufzubauen, welches eingangsseitig unmittelbar an die 220 Volt Netzspannung anschließbar ist und ausgangsseitig stabile z.B. ca. 5 Volt und/oder z.B. ca. 3,3 Volt zum Betrieb von Halbleitern liefert und hierbei einen Bauraum von um die 2mm$^2$ aufweist und hierbei außerdem als Ganzes und in seinen Einzelteilen völlig ohne zusätzliche Kühlelemente auskommt. Selbstverständlich können an Stelle dieser Niedervoltbeträge auch andere Niedervoltbeträge bereitgestellt werden, wie z.B. 1,5V 2,5V, 12V, 24V, 48V, etc. Der Fachmann würde es auch in Betracht ziehen mit Hilfe bekannter Schaltungen die Ausgangsspannung einstellbar zu gestalten, bzw. mehr als nur einen einzigen Niedervoltbetrag zur selben Zeit bereitzustellen. So könnten auch zwei oder mehr Niedervoltbeträge (z.B. 5 Volt und 3,3 Volt) gleichzeitig zur Verfügung gestellt werden.

So ist es auf diesem Wege möglich, in einer einzigen integrierten Schaltung eine einzige erfindungsgemäße Schaltung zur Umwandlung von der Netzspannung in eine Niedervoltspannung bereitzustellen, welche innerhalb dieser integrierten Schaltung mehr als nur einen einzigen Chip mit Energie versorgt. Hierbei können die Chips auch voneinander unterschiedliche Betriebsspannungen zur Energieversorgung benötigen.

Wenn darüber hinaus eine derartige elektronische Schaltung zur Energieversorgung einen Transistor ($T_{Load}$) umfasst, der Eingangsspannungen über einen einstellbaren Schwellwert von ca. 20 bis 80 Volt sperrt, dann bewirkt dies, dass Spannungen oberhalb dieses Werts von der erfindungsgemäßen elektronischen Schaltung ausgesperrt bleiben.

Dieser Spannungsbetrag ist an seiner oberen Grenze von der maximal akzeptablen Bauteilgröße abhängig und wird mit Hilfe dieses Parameters vom Fachmann ausgewählt werden.

Im vorliegenden Fall ist betreffend der Bauteilgröße das voluminöseste Bauteil $C_{Load}$. Gute Erfahrungen wurden im vorliegenden Fall für eine obere Grenze bei einem Voltbetrag von um die 80 Volt gesammelt. Bei um die 80 Volt kann insbesondere $C_{Load}$ und $T_{Load}$ noch so klein bemessen werden, dass die Gesamtschaltung auf Silizium nicht mehr als die vorliegend angestrebten 2mm$^2$ + die Fläche des Kondensators beträgt. Oberhalb dieses Werts wird zunehmend mehr Energie verbrannt, was dann zusätzliche Kühlkomponenten zur Ableitung der hierbei erhaltenen zusätzlichen Verlustwärme erforderlich machen würde.

Dieser Spannungsbetrag ist darüber hinaus an seiner unteren Grenze von dem minimal akzeptablen Ladestrom für $C_{Load}$ abhängig. Gute Erfahrungen wurden im vorliegenden Fall für eine untere Grenze bei einem Voltbetrag von um die 20 Volt gesammelt. Bei um die 20 Volt kann insbesondere der Kondensator $C_{Load}$ noch sinnvoll geladen werden. Der Fachmann wird daher den unteren Wert mit Hilfe dieses Parameters der Ladbarkeit des Kondensators $C_{Load}$ auswählen.

Wenn darüber hinaus bei einer derartigen elektronischen Schaltung die Ladekapazität $C_{Load}$ eine Kapazität zwischen um die ca. 1uF und um die ca. 100uF aufweist, so kann mit diesen Werten im vorliegenden Fall hinreichend viel Energie gespeichert werden, um VCC zu bedienen und Halbleiter mit Spannung zu versorgen.

Hierbei wird die untere kapazitive Grenze qualitativ dadurch begrenzt, dass der minimal notwendige Stromfluß sichergestellt ist, um die Schaltung zu ermöglichen.

Die obere kapazitive Grenze wird wiederum qualitativ durch die verarbeitbare Bauteilgröße begrenzt. Im praktischen Betrieb wurden insbesondere gute Erfahrungen mit einer Ladekapazität von 1uF und auch mit einer Ladekapazität mit 100uF gemacht, sowie mit den handelsüblichen Kapazitäten um diese beiden Werte herum, sowie mit jedem der handelsüblichen Kapazitäten zwischen diesen beiden Werten.

Der Ladevorgang folgt hierbei der Formel für die Berechnung der Kapazität eines Kondensators Entladung:

$$VKK(t) = VKKmax - I_{Out} * t / C_{LOAD}$$

bei konstantem Entladestrom $I_{Out}$.

VKKmax ist hierbei der Momentanwert unmittelbar nach Ende der Ladung; hier wird t=0 gesetzt.

Ladung:

bei annähernd konstantem Ladestrom $I_{load}$:

$$VKK(t) = VKKmin + (I_{load} - I_{Out}) * t / C_{LOAD}$$

VKKmin ist der Momentanwert der Spannung am Kondensator unmittelbar vor Beginn der Ladung; Zu diesem Zeitpunkt wird t=0 gesetzt.

Wenn darüber hinaus bei einer derartigen elektronischen Schaltung zur Energieversorgung z.B. von Halbleitern, wobei die Ladekapazität durch die (aus Sicht der Schaltung gesehen) positive Halbwelle der Spannungen unterhalb des Schwellwerts geladen wird, bewirkt dies eine Vereinfachung des Schaltungsaufbaus.

Um z.B. die positive Halbwelle der Netzspannung zum Laden der Ladekapazität $C_{Load}$ zu verwenden, kann in den Strompfad der vom Netzanschluss zur Ladekapazität (die z.B. ein Kondensator ist) führt, eine Gleichrichterdiode eingefügt werden. Als positive Halbwelle wird vorliegend ein positiver

Spannungsverlauf relativ zur Bezugserde der Schaltung verstanden.

Optional könnte die negative Halbwelle durch eine Zusatzschaltung zu einer positiven Halbwelle gespiegelt werden und damit auch noch zusätzlich genutzt werden. Hierdurch kann die Leistungsfähigkeit verdoppelt werden.

Sollen z. B. beide Halbwellen, also sowohl die positive, als zugleich auch die negative genutzt werden, so könnte dies erreicht werden, indem beispielsweise die zwischen $T_{Load}$ und der Eingangsnetzspannung angeordnete Diode durch einen Gleichrichter / eine Brückenschaltung ergänzt würde.

Wenn erfindungsgemäß nur die positive Halbwelle der Netzperiode zum Laden des Energiespeichers verwendet wird, vereinfacht sich aber die hierfür notwendige Schaltung signifikant weil für den Betrieb der Transistoren in erster Linie positive Betriebsspannungen nützlich sind. Da wie beschrieben bevorzugt zweimal pro Halbwelle geladen wird (in der Nähe eines jeden Durchbruchs der positiven Halbwelle durch die Null Volt- Linie), ist der Energiespeicher kurz vor dem Nulldurchgang zum Eintritt in die negative Halbwelle voll aufgeladen, und dieser kann die Schaltung während der gesamten negativen Halbwelle, der Fachmann wird ihn und die Bauelemente der Schaltung entsprechend auslegen auch noch versorgen. Hierfür wird dann auch die Kapazität entsprechend ausgelegt werden. Die Tatsache, dass sich daraus ein zeitlich leicht unsymmetrisches Ladeverhalten ergibt, ist für die meisten Anwendungen unerheblich, kann aber durch geeignete, dem Fachmann prinzipiell bekannte Regelprozesse optimiert werden.

Dies bedeutet natürlich nicht, dass die vorliegende Schaltung nicht auch funktionieren würde, wenn die Eingangsnetzspannung (z.B. durch Drehen des Steckers) einfach umgepolt würde.

Erfindungsgemäß wird für beide Steckmöglichkeiten eines Netzsteckers schaltungstechnisch sichergestellt, dass durch die in Bezug zur internen Masse positive Halbwelle die Ladekapazität $C_{Load}$ geladen wird.

Wenn darüber hinaus eine derartige elektronische Schaltung als Stromquelle eine gesteuerte Stromquelle umfasst, bewirkt dies, dass auf eine geregelte Weise Strom in die Ladekapazität fließen kann. Dies kann dann so lange geschehen, bis die Spannung an der Ladekapazität einen maximalen Wert erreicht hat.

Um eine gesteuerte Stromquelle CM zu realisieren, wird die Stromquelle CM über die Regelung des Blocks 202 angesteuert. Diese gesteuerte Stromquelle CM steuert wiederum $T_{Load}$, dessen Source S mit der gesteuerten Stromquelle CM verbunden ist.

Eine derartige gesteuerte Stromquelle CM kann z.B. als "Stromspiegel" aufgebaut werden. Ein solcher "Stromspiegel" kann dann z.B. aus mindestens zwei Transistoren gebildet werden, wobei die Größen der beiden Transistoren sich z.B. im Faktor 99 zu 1 unterscheiden kann. Aus diesem Größenverhältnis ergibt sich ein entsprechender Stromverstärkungsfaktor.

Wenn darüber hinaus bei einer derartigen elektronischen Schaltung zur Energieversorgung von Halbleitern bei welcher die Spannung an der Ladekapazität (Spannungsquelle) durch eine Spannungs-Überwachungsschaltung gemessen wird und bei welcher im Fall, dass ein vorgegebener Wert überschritten ist, ein Komparator anspricht, dessen Signalausgang wiederum die Stromquelle anspricht und

bei welcher dann kein Strom durch den Transistor ($T_{Load}$) fließt, wobei der Transistor (TLoad) in Gateschaltung betrieben wird, wodurch der Transistor ($T_{Load}$) in einen nicht-leitenden Zustand überzugehen in der Lage ist,

dann ist hierdurch ein Regelkreis geschaffen, der geeignet ist, die erfindungsgemäße Schaltung periodisch von der Netzspannung zu trennen.

Die Spannung am Kondensator wird in dieser Ausgestaltungsform bevorzugt durch eine Spannungs-Überwachungsschaltung gemessen. Wenn dann ein bestimmter maximaler Wert überschritten ist, spricht der Komparator 203 an, dessen Signalausgang die Steuerschaltung 202 derart beeinflußt, dass die Gate des Transistors so angesteuert wird, dass die Stromquelle Cmin einen nicht leitenden Zustand übergeht und $T_{Load}$ sperrt.

Hierdurch kann insbesondere bewirkt werden, dass der Kondensator $C_{Load}$ jedes Mal auch wirklich vollständig aufgeladen wird. Gegenüber alternativen Methoden zur Ladung der Kapazität $C_{Load}$, wie z.B. eine Zeitsteuerung ab dem Nulldurchgang oder eine Abschaltung auf Basis der Eingangsspannung hat diese Vorgehensweise den Vorteil, dass der Kondensator auch bei Spannungsschwankungen auf der Netzseite oder unregelmäßiger Last immer voll aufgeladen wird.

In einer weiteren Ausgestaltungsform der Erfindung kann die diesbezügliche Schwelle einstellbar gestaltet sein, um damit die in dem Energiespeicher geladenen Energie an den Bedarf anzupassen und somit die Verlustleistung noch zusätzlich zu minimieren bzw. bei einer generischen Lösung auf einem Chip, die gespeicherte Energie für unterschiedliche Anwendungen skalierbar zu machen.

Ohne eine der $\sin^2$ Funktion angenäherte Form dieser Strom-Flanken (bzw. eine Impulsform mit gerundeten Flanken etwa in Form einer Cosinusflanke) würde je nach erforderlicher Höhe des Stroms ein erhebliches elektromagnetisches Störspektrum in das Netz eingetragen. Gemäß Ladeposition am Anfang oder am Ende folgt der Lade-Strom der Spannungs-Sinuswelle des Netzes und wird dann abhängig vom Ladezustand des Kondensators abrupt abgeschaltet. Das jedoch könnte zu Schwierigkeiten bei der Einhaltung der diesbezüglichen gesetzlichen EMV Vorschriften führen. Wenn also darüber hinaus bei einer derartigen elektronischen Schaltung zur Energieversorgung von Halbleitern eine derartige Ladung, also einen Ladestrom in den Ladekondensator nach einer Anlaufzeit durch eine in einem eigenen $\sin^2$ Generator erzeugte $\sin^2$ Kurve gestaltet wird, so hat dies den Vorteil einer Optimierung des Betriebsverhaltens zur Einhaltung der gesetzlich vorgeschriebenen EMV Grenzwerte.

Dies kann mit Hilfe eines $\sin^2$-Funktonsgenerators umgesetzt werden, der z.B. digital über einen Zähler eine Kurve erzeugt, die dann in einem weiteren Schritt geglättet und ausgegeben wird.

Bevorzugt wird dieser Funktionsgenerator mit dem System eingeschaltet und dann, sobald er den Betriebszustand erreicht hat, also nach dem Aufbau der Funktion, der erfindungsgemäßen Schaltung zugeschalten. Dieser Ausgangsstrom wird dann über den erwähnten Stromspiegel dem System zugeführt.

Die Pulsformung gemäß der $\sin^2$ Funktion vermeidet solche abrupte Abschaltungen und die damit verbundenen Probleme. Durch die $\sin^2$-Formung der Stromimpulse wird die in das Netz eingebrachte hochfrequente Energie minimiert. Statt der $\sin^2$ Funktion kann auch die allgemeinere Gaußfunktion oder Funktionen mit vergleichbarer Wirkung verwendet werden.

Wenn darüber hinaus die elektronische Schaltung zur Energieversorgung von Halbleitern die Stromquelle über mehr als eine eigene Steuerschaltung ansteuerbar gestaltet ist, wobei eine erste Steuerung durch eine erste Steuerungsschaltung erfolgt, und die zweite Steuerung nach einer definierten Zeit durch die zweite Steuerschaltung erfolgt, wenn der Betrieb mit Hilfe einer $\sin^2$ Kurvengestalt durchgeführt wird, so kann durch dieses Umschalten auf einen $\sin^2$ Betrieb einerseits schnell der Betriebszustand erreicht werden und es können anderseits die EMV-Vorgaben eingehalten werden. Die die hierzu geeigneten Schaltungen und das Prinzip des Umschaltens wurde bereits vorgestellt. Die Anlaufphase ist geboten, weil für die Darstellung einer $\sin^2$ Kurvenform eine ordentliche geregelte Stromversorgung benötigt wird, die in der Anlaufphase normal nicht zur Verfügung steht.

Das Umschalten von der normalen Sinuskurve der Versorgung auf eine künstlich hergestellte Sinuskurve welche eine $\sin^2$-Kurvengestalt aufweist erfolgt bevorzugt vor dem Hintergrund zuvor definierter Umschaltbedingungen.

Gute Erfahrungen wurden mit der Bedingung gemacht, dass die Umschaltung erfolgt, wenn die Schaltung eingefahren ist, also wenn alle Bauelemente der Schaltung ihren Betriebszustand erreicht haben. Hierzu kann beispielswiese eine "Power-Good"-Schaltung verwendet werden, welche den Reset des Prozessors freigibt. Erst dann würde der Prozessor loslaufen und nach Erreichen einer bestimmten Startroutine ein Registerbit umschalten, das wiederrum den Eingang der Stromquelle von Steuerung 201 auf Steuerung 202 umschaltet.

Alternativ kann das Umschalten auch nach einem zuvor definierten Zeitpunkt nach dem Anschalten erfolgen. Gute Erfahrungen wurden mit einem Umschaltzeitpunkt von 1 bis 3 Halbwellen nach dem Anschaltzeitpunkt gemacht. Als geeigneter Parameter für diese Umschaltung kann z.B. die Anzahl der durchlaufenen Nulldurchgänge der Sinusschwingung herangezogen werden.

Alternativ kann das Umschalten außerdem auch bei Erreichen eines zuvor definierten Zustands nach dem Anschalten erfolgen. Gute Erfahrungen wurden mit der Eigenschaft gemacht, dass die zweite Steuerschaltung, welche für die Generierung des $\sin^2$ zuständig ist, betriebsbereit ist (Power- Fail- Reset wird inaktiv) .

Die erste Steuerschaltung 201 dient dann zum Laden von $C_{Load}$ beim Einschalten der Netz-Spannung. Es handelt sich dabei z.B. um eine vereinfachte Steuer-Schaltung, die netzspannungsgesteuert Strom über die Stromquelle in den Kondensator fließen läßt, bis die Netzspannung einen vorbestimmten Wert überschritten (z.B. in der positiven Sinus-Flanke) beziehungsweise unterschritten (z.B. in der negativen Sinusflanke) hat. Dann wird die Stromquelle CM abgeregelt. Diese Betriebsart ist zunächst quasi digital und dauert ca. 1-3 Netzperioden, bis der Ladekondensator eine Mindestladung erhalten hat und an der restlichen Elektronik eine stabile Spannung herrscht und alle Schaltungsteile eingeschwungen sind.

Wenn darüber hinaus bei einer derartigen elektronischen Schaltung eine Überspannungsschutz-Schaltung 204 geeignet ist, ab einem definierbaren maximalen Spannungspegel die Ladekapazität zu entladen, so wird die Ladekapazität $C_{Load}$, im Fall, dass sie außerhalb ihrer Spezifikation beansprucht wird, vor der Zerstörung bewahrt. Insbesondere wird die Ladekapazität $C_{Load}$ hierdurch vor zu hohen Spannungspegeln bewahrt. Ein einfaches Beispiel für eine Schutzschaltung ist eine Z-Diode.

Wenn darüber hinaus bei einer derartigen elektronischen Schaltung die Bezugsmasse der Schaltung mit der Netzspannung an der Eingangsseite verbunden ist, und die Stromquelle bewirkt, dass ein definierter steuerbarer Strom durch den Hochvolt-Transistor in die Ladekapazität fließt, dann ist hierdurch eine schwimmende Masse (floating ground) realisiert.

Hierzu wird prinzipiell die Signal-Masse GND der elektronischen Schaltung mit der Netzphase verbunden. Der Leistungs-MOS-FET bzw. die gesamte elektronische Schaltung "schwimmen" auf der Netzspannung (schwimmende Masse), weil das Netzgerät aufgrund dieser Schaltung nicht galvanisch vom Netz getrennt ist.

Konkret wird erfindungsgemäß die Bezugserde der Schaltung mit der Phase der Netzspannung verbunden. Hierdurch schwebt die gesamte Niedervolt-Elektronik gegenüber der Netz-Erde z.B. bei 220V AC Netzen auf +/- 320V + Versorgungsspannung ("Schwimmende Masse") und die erzeugte Gleichspannung des Netzteils ist nicht galvanisch von der Netzspannung getrennt.

Dies hat zur Folge, dass der Transformator eingespart werden kann und durch eine vereinfachte, sehr kompakte und preisgünstige Schaltung ersetzt werden kann. Bei Bedarf kann für eine entsprechende Schutzisolierung der Schaltung oder eine galvanische Trennung von berührbaren Schaltungsteilen auf der Niedervoltseite gesorgt werden (z.B. indem Signale über einen Optokoppler weitergeführt werden).

Die Aufgabe wird darüber hinaus auch durch einen Chip gelöst, der mindestens eine der beschriebenen erfindungsgemäßen elektronischen Schaltungen zur Energieversorgung von Halbleitern umfasst. Die erfindungsgemäße elektronische Schaltung ist insbesondere geeignet, Halbleiter mit Energie zu versorgen und hierfür unmittelbar an die Netzspannung angeschlossen zu werden. Aufgrund ihrer durch die erfindungsgemäße Schaltung erreichte minimierte Baugröße bei minimierter Verlustleistung und der weitgehenden Reduzieung auf Bauteile die in einem üblichen Halbleiterprozess dargestellt werden können, kann sie mit dem zu versorgenden Halbleiter bzw. Chip gemeinsam auf einem Silizium-Chip integriert und/oder in ein gemeinsames Gehäuse eingegossen werden. Unter dem Begriff "Chip" wird hierbei insbesondere ein integrierter "Chip" verstanden.

Die Aufgabe wird darüber hinaus auch durch ein Hausgerät gelöst, das mindestens einen erfindungsgemäßen Chip und/oder mindestens eine erfindungsgemäße elektronische Schaltung zur Energieversorgung von Halbleitern nach einem der zuvor genannten Ansprüche umfasst. Derartige erfindungsgemäße elektronische Schaltungen / Chips können auch Teil von elektrischen Geräten, insbesondere von Hausgeräten, wie z.B. HiFi-Komponenten, Kühlschränken, Waschmaschinen, Smart-Home-Systemen etc. sein.

Die Aufgabe kann darüber hinaus auch durch eine Netzversorgung gelöst werden, die mindestens eine erfindungsgemäße elektronische Schaltung und/oder mindestens einen erfindungsgemäßen Chip zur Energieversorgung von Halbleitern umfasst. Derartige erfindungsgemäße elektronische Schaltungen / Chips sind durch ihren Anschluß an das Stromnetz auch Teil dieses Stromnetzes. Hierbei sind auch Stromnetze eingeschlossen, welche Daten übertragen. In diesem Fall kann die erfindungsgemäße elektronische Schaltung den Chip mit elektrischer Energie versorgen, der die über die Netzleitung übermittelten Daten empfängt, steuert oder über die Netzleitung aussendet.

Die Aufgabe wird darüber hinaus auch durch ein Gebäude gelöst, das mindestens eine erfmdungsgemäße Netzversorgung umfasst. Derartige erfindungsgemäße elektronische Schaltungen / Chips können auch Teil eines Gebäudes werden, sei es, dass sie an ein Gebäudeelement angeschlossen werden, oder dass sie in das Gebäude integriert sind, beispielsweise wenn sie eine in das Gebäude integrierte Fernbedienung mit Energie versorgen.

Die Aufgabe wird darüber hinaus auch durch ein Verfahren gelöst, umfassend die Schritte, dass beim Durchbruch der Sinuskurve durch die 0-Volt-Grenze von der negativen Halbwelle in die positive Halbwelle eine Stromquelle CM aufgeregelt und über diese Stromquelle eine Ladekapazität CLoad lädt und welches nach einer definierbaren Ladezeit eine defmierbare maximale Spannung VRef erreicht und nach Erreichen dieser maximalen Spannung VRef den in der Stromquelle CM eingeprägten Strom bis auf 0 zurück führt und so lange sich der Netzsinus oberhalb von VRef befindet den in die Landekapazität fließenden Strom auf 0 hält und bei Unterschreiten einer ebenfalls definierbaren weiteren maximalen Spannung VRef* in der Stromquelle CM erneut ein Strom eingeprägt wird, wobei dieser Strom anschwillt und mit der fallenden Sinusspannung am Netz abnimmt und mit der Netzsinusspannung den Wert 0 erreicht und umfassend den Schritt, dass die von der Stromquelle CM bereitgestellte Spannung einen Komparator (203a) anspricht, wenn ein maximaler Spannungswert überschritten ist, oder einen anderen Komparator (203b) anspricht wenn ein minimaler Spannungswert unterschritten ist.

Derart ausgestaltet umfasst das erfindungsgemäße Verfahren verfeinert die folgenden Einzelschritte nach Erreichen eines eingeschwungenen Zustandes:

- Beim Start der ersten positiven Netzhalbwelle wird die Stromquelle CM aufgeregelt, indem ein ausreichend hoher Strom eingeprägt wird. Mit der steigenden Spannung steigt nun auch der Strom in $C_{Load}$ sinusförmig an.
- Nach einer bestimmten Ladezeit, die vom Verlauf der Netzspannung und dem Ladestrom abhängt, zeigt CMP (203) an, dass $C_{Load}$ die maximale Spannung VRef erreicht hat.
- Die Regelung nimmt nach Erreichen der maximalen Spannung VRef den in der Stromquelle CM eingeprägten Strom in Form einer $\sin^2$ Funktion bis auf 0 zurück
- Der Netzsinus überschreitet sein Maximum - es fließt aber aufgrund der Abschaltung kein Strom in den Ladekondensator.

- Die Netzspannung nähert sich dem nächsten Nulldurchgang. Ausgelöst von einem Zeitgeber, der von dem vorherigen Nulldurchgang getriggert wurde, wird nun erneut ein Strom in CM eingeprägt und zwar ebenfalls mit einer steigenden Flanke, die die Form einer $sin^2$ Funktion einnimmt.
- Der Strom über TLoad erreicht ein Maximum und nimmt nun sinusförmig mit der fallenden Sinusspannung am Netz ab.
- Wenn die Spannung am Kondensator die obere Grenze erreicht hat, wird wiederum vom Komparator (203) ein Signal zum Abschalten gegeben und der in CM eingeprägte Strom wird $sin^2$-förmig zurückgenommen.
- Der Startpunkt für diesen zweiten Ladevorgang in der positiven Sinushalbwelle wird entsprechend so ausgerechnet werden, dass er früh genug eintritt, damit der Kondensator vollständig aufgeladen werden kann, bevor die Netzspannung die maximale mögliche Spannung von VKK unterschreitet. Anderseits wird dieser Zeitpunkt spät genug gewählt sein, dass nicht unnötig viel Verlustleistung wegen der hohen Ladespannung entsteht.

Wenn darüber hinaus bei einer derartigen Verfahren in der Phase vom Anschalten des Netzteils bis zum Zeitpunkt in welchem alle Bauelemente innerhalb des Netzteils ihren Betriebszustand erreicht haben, die Stromquelle CM durch einen ersten Regler gesteuert wird und nachdem alle Bauelemente innerhalb des Netzteils ihren Betriebszustand erreicht haben, die Stromquelle CM statt durch den ersten Regler durch einen zweiten Regler geregelt wird, dann wird hierdurch beim Anschalten der elektronischen Baugruppe an das Netz ein EMV konformer Betrieb bewirkt.

Vref kann beispielsweise mit einer zusätzlichen Schaltung erzeugt werden, umfassend zum Beispiel einem Widerstand und einer Z-Diode in Serie, welche direkt an die Eingangsseite des Netzteils angeschlossen werden. Parallel zur Z-Diode kann dann eine kleine Kapazität geschaltet werden. Vref ist dann die Spannung über der Z-Diode.

Die Aufgabe wird darüber hinaus auch durch eine Verwendung einer zuvor genannten elektronischen Schaltung gelöst, welche im Rahmen einer Spannungsumwandlung dazu dient, die EMV dieser Spannungsumwandlung zu reduzieren. Wie bereits aufgezeigt dient die erfindungsgemäße Schaltung nicht nur zum Zweck eine Spannungsumwandlung zu realisieren, bzw. um mit Hilfe dieser Spannungsumwandlung einen Halbleiter unmittelbar in einem einzigen Gehäuse mit seinem Spannungswandler an die Netzspannung anzuschließen und diesen mit Strom zu versorgen, sondern darüber hinaus insbesondere durch den Einsatz einer $sin^2$-Kurve oder einer Gausskurve an Stelle des Netzsinus dazu, die EMV zu reduzieren und zwar so weit, dass sie für die jeweiligen Einsatz unter den gesetzlich geforderten Grenzwerten liegen.

Eine bevorzugte Ausgestaltungsform der Erfindung geht aus den Fig. hervor. Hierbei zeigt

Fig. den Stand der Technik;

Fig. 1 eine erfindungsgemäße Lade-Strompulse in Bezug zur Sinuswelle;

Fig. 2 ein Blockdiagram der Ladeschaltung unter Verwendung eines FET;

Fig. 3 eine Skizze der Details des Ladetimings;

Fig. 4 ein Schaltbild zum Aufbau eines Stromspiegels.

Fig. 5 ein Blockdiagram der Ladeschaltung unter Verwendung eines FET und eines zusätzlichen Komparators;

Handelsübliche Netzteile ohne galvanische Trennung können zum Beispiel wie in der Fig. zum Stand der Technik dargestellt entweder mit Hilfe eines Vor-Widerstands oder einer Vor-Kapazität implementiert werden. Beide Lösungen haben zum Nachteil, dass ihre Bauteile wegen der notwendigen Spannungsfestigkeit relativ groß und teuer sind, und oftmals auch eine erhebliche Wärmeentwicklung verursachen.

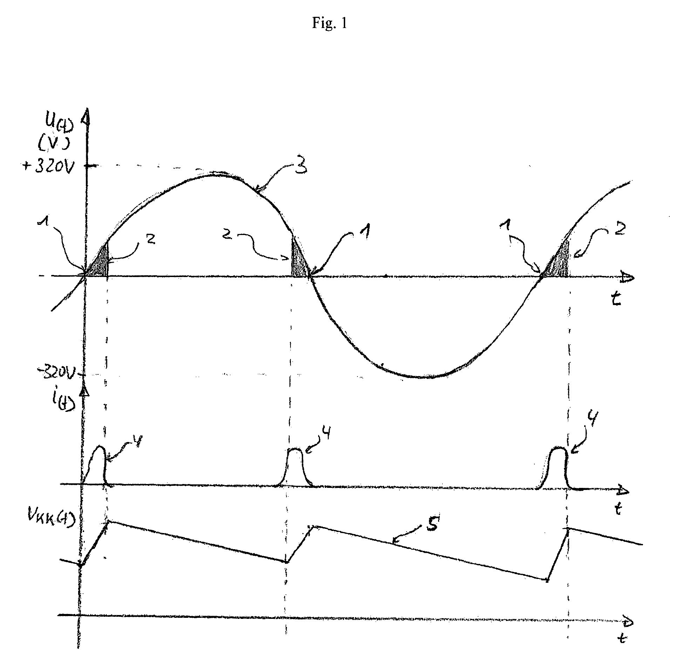

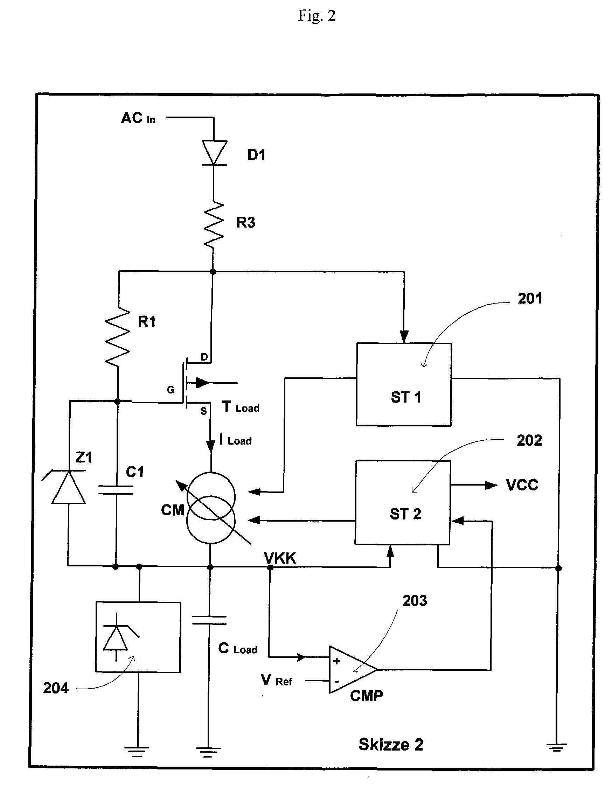

Hiervon abgrenzend zeigt Fig. 1 eine Sinuskurve 3 der Spannung, und ihre Netz-Sinus-Nulldurchgänge 1. Darüber hinaus ist auf der positiven Halbwelle der Netz-Sinus-Nulldurchgänge 1 bei den Nulldurchgängen ein optimales Ladefenster 2 dargestellt. Durch die erfindungsgemäße Schaltung werden die während dieses optimalen Ladefensters 2 vorherrschenden Strom-Ladepulse 4 zur Aufladung der Ladekapazität $C_{Load}$ genutzt. Darüber hinaus wird durch die erfindungsgemäße Schaltung an der Ladekapazität $C_{Load}$ die Spannung VKK 5 abgegeben (die dann mit Hilfe weiterer Bauelemente wiederum zur Betriebsspannung für Halbleiter VCC (vgl. Fig. 2) wird. Der VCC Regler kann auch ein Teil der zweiten Steuerschaltung sein).

Fig. 2 zeigt ein Blockdiagram der Ladeschaltung unter Verwendung eines FET. Hierbei ist eine zweite Steuerung 202 der Stromquelle CM dargestellt, welche im eingefahrenen Betrieb die $sin^2$-Kurve bereitstellt. Diese Steuerung beinhaltet optional auch einen analogen Spannungsregler für VCC. Beim Anfahren der Schaltung übernimmt die Startschaltung 201 die Ansteuerung der Stromquelle. Die gesamte Schaltung kann darüber hinaus mit einem optionalen Überspannungsschutz 204 ausgestattet sein.

Der Hochvolt-Transistor $T_{Load}$ (z.B. MOSFET vom Typ des Typs FQNL2N50B) wird hierbei in einer so genannten Gateschaltung betrieben. Hierzu wird er wird über eine Diode D1 direkt an die Netzspannung angeschlossen. Die Gate G von $T_{Load}$ wird über den Widerstand R1 und der Zenerdiode Z1 (z.B. 10V Z-Diode) auf eine konstante Spannung gehalten. In der in Fig. 2 dargestellten Schaltung ist zusätzlich ein optionaler Strombegrenzungswiderstand R3 von z.B. 100 Ohm eingefügt. Dieser Widerstand begrenzt den Strom bei irregulären Betriebszuständen und dient hierdurch als Sicherung bei Störfällen.

Die Source S von $T_{Load}$ ist mit der Stromquelle CM (die wiederum als Stromspiegel betrieben werden kann) verbunden. Mit $T_{Load}$ bekommt die Stromquelle CM eine ausreichende Spannungsfestigkeit um direkt am Netz angeschlossen zu werden. Über den Transistor $T_{Load}$ und über die Stromquelle CM wird erfindungsgemäß in der Nähe des Nulldurchgangs der Netz-Sinus-Spannung während der positiven Halbwelle des Netz-Sinus (vgl. Fig.1) der Kondensator $C_{Load}$ aufgeladen.

Die Stromquelle CM wiederum wird über die Regelung Block 202 angesteuert. Im Fall dieses Beispiels wird der Strom der von der Regelung Block 202 eingeprägt wird, von CM im vorliegenden Beispiel um das Hundertfache verstärkt. In diesem Beispiel kann dann so ein Spitzenstrom von etwa 200mA erzeugt werden.

Die Stromquelle CM wird im vorliegenden Beispiel außerdem als gesteuerte Stromquelle sowie als Stromspiegel betrieben.

Bei dem Kondensator $C_{Load}$ handelt es sich vorliegend bevorzugt um einen Keramik- oder Tantal-Kondensator mit einer zulässigen Betriebsspannung von bis zu 25V. An $C_{Load}$ entsteht dann die ungeregelte Spannung VKK die von einem z.B. analogen Regler in die geregelte Betriebsspannung VCC umgewandelt wird (Teil von Block 202).

Ein Laden des Ladekondensators erfolgt erfindungsgemäß bevorzugt in der positiven Halbwelle. Die Spannung über den Stromtragenden Power-MOS-FET ist damit gegenüber der Masse erfindungsgemäß immer positiv. Die Diode D1 (die im vorliegenden Beispiel vom Typ BYD17ZM ist) im Stromkreis verhindert hierbei eine Zerstörung während der negativen Netzphase.

Der Kondensator C1 dient in dieser Schaltung insbesondere zur Unterdrückung von Oszillationen.

Mit Hilfe dieser Schaltung kann der Ladekondensator $C_{Load}$ im Prinzip zu jedem Zeitpunkt der positiven Sinushalbwelle geladen werden, allerdings wird dabei die Verlustleistung über $T_{Load}$ und CM zum Sinusmaximum hin immer größer. Die Komponenten müßten dann viel größer ausgelegt werden. Erfindungsgemäß wird daher ab einer einstellbaren Spannung die Stromquelle CM abgeschaltet.

Sobald der Komparator CMP (Block 203) am Kondensator $C_{Load}$ eine Spannung größer der Referenzspannung VRef entdeckt, wird der Regelung (Block 202) das Signal zum Abschalten der Stromquelle CM übermittelt. Es fließt dann kein Strom mehr über $T_{Load}$. Der größte Teil der Netzspannung fällt dann über $T_{Load}$ ab. Somit wird immer in der Nähe der maximal zulässigen Betriebsspannung von $C_{Load}$ (hier ca. 20V) der Ladevorgang abgeregelt. Der diesbezügliche Regelkreis bestehend aus dem Komparator CMP, der VKK mit VRef vergleicht, aus der Regelung Block 202 und aus dem Stromspiegel CM.

Weiterhin kann optional eine Überspannungsschutz-Schaltung (204) verwendet werden, um ab einem bestimmten maximalen Pegel $C_{Load}$ gegen GND zu entladen. Das kann insbesondere als Sicherheitsfunktion für die Verhinderung einer Überspannung an $C_{Load}$ sinnvoll sein.

Funktion der Steuerung:

Die Regelung der Ladeimpulse über die Stromquelle CM wird im eingeschwungenen Zustand vom Steuerungsmodul Block 202 übernommen. Der Steuerung können verschiedene Kriterien zugrunde gelegt werden. In Betracht kommen z.B. Zeitgeber, die jeweils vom Nulldurchgang jeder Netz-Sinuswelle gestartet werden, und/oder das Signal von CMP, das die vollständige Ladung von $C_{Load}$ anzeigt kann diese Steuerung bewirken. Außerdem können als Stellgrößen ergänzend bzw. alternativ auch fixe Spannungswerte auf dem Netz verwendet werden.

In eingefahrenem Zustand wird dann bevorzugt eine Kombination aus diesen drei Stellgrößen verwendet.

Die Funktion von Block 201 dient ebenfalls der Regelung der Ladeimpulse über die Stromquelle CM, und zwar bevorzugt im nicht eingeschwungenen Zustand kurz nach dem Einschalten der Netzspannung. Die zu betreibende Schaltung verfügt zu diesem Zeitpunkt noch nicht über eine stabile Spannungsversorgung, sondern versorgt sich zu diesem Zeitpunkt der erfindungsgemäßen Schaltung folgend bevorzugt über einen sehr hochohmigen Widerstand direkt aus der Netzspannung.

Hierbei kann es sich beispielsweise um einen Stromschalter handeln, der in Abhängigkeit von der externen Netzspannung die Stromimpulse ein- und ausschaltet. Eine derartige Steuerung leistet bereits einen grundlegenden Beitrag zur Regelung der VKK-Spannung, die mit Hilfe der dann zugeschalteten stabilen Spannungsversorgung weiter verbessert wird, um eine so optimierte VKK-Spannung zu erhalten. Daher wird bevorzugt nach dem Einschalten der Netzspannung auf die Steuerung in Block 202 umgeschaltet werden, sobald die interne Spannungsversorgung einen ausreichenden Pegel erreicht hat und die Schaltung eingeschwungen ist, also ihren Betriebszustand erreicht hat.

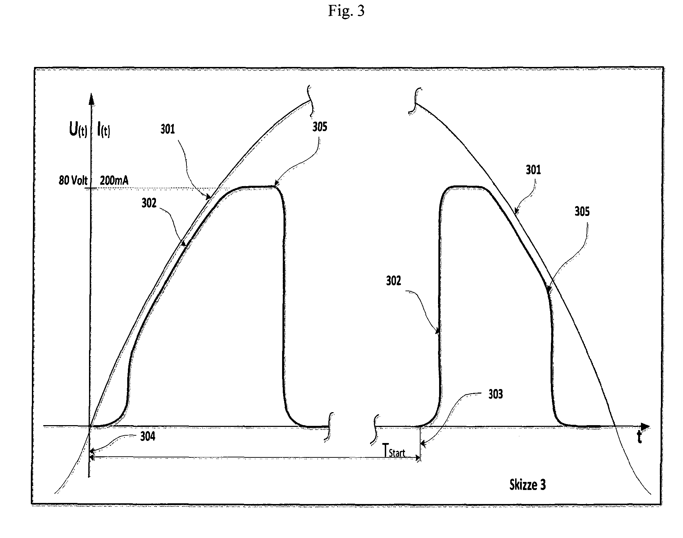

Fig. 3 zeigt Details des Ladetimings bei einem beispielhaften Schwellwert von 80 Volt. Hierbei ist ein Ausschnitt der Netz-Sinus-Spannung 301 dargestellt, sowie der Ladestrom 302.

Hierin sind die Netzsinusspannung 301, der Ladestrom 302, der Ablauf des Zeitgebers 303, der Start des Zeitgebers 304, sowie das erreichte VKK max. 305 dargestellt. Der Start des Zeitgebers für Tstart 304 liegt bevorzugt im Durchbruch der Sinuswelle durch die X-Achse. Nach Ablauf des Zeitgebers für Tstart 303 wird das zweite Mal in der positiven Halbwelle Ladestrom bereitgestellt. Dieser zweite Ladestrom wird nach Erreichen eines spannungsgesteuerten Triggerpunkts für die Abschaltung des Strompulses 305 (VKK max. erreicht).

In Fig. 3 ist die genaue Wirkweise der Steuerung erkennbar. Der erste sowie der zweite Stromimpuls (302) werden jeweils von der gesteuerten Stromquelle gemäß einer Sin$^2$ förmigen Hüllkurve gesteuert. Der erste Stromimpuls wird z.B. von dem Nulldurchgang des Netzsinus gestartet (304). Der zweite Stromimpuls wird hier z.B. von einem Timer (TStart) gestartet (303).

Das was bedeutet, dass die jeweils steigende und fallende Flanke des Stromimpulses gemäß dieser Funktion weich auf- und abgeregelt wird, um die aus elektrischen Ein- und Ausschaltvorgängen resultierenden Frequenzspektren zu vermeiden. Alternativ würden diese sonst über das Netz übertragen und könnten andere Geräte in ihrer Funktion beeinträchtigen. Für die Sin$^2$-Funktion wird bevorzugt ein elektronischer Funktionsgenerator verwendet, wie er in der Fachliteratur in unterschiedlichster Ausgestaltung beschrieben wird. In der vorliegend gezeigten Anwendung bleibt dieser Funktionsgenerator nach Erreichen des maximal gewünschten Stroms auf dem erwähnten Pegel stehen, bis der Regelkreis für den Ladestrom das Signal zum Abregeln des Stroms gibt (305) und damit der Strom gemäß einer sin$^2$ Funktion auf Null zurückgeführt wird.

In der Fig. 3 ist auch erkennbar, dass die beiden Stromimpulse "deformiert" sind, was bedeutet, dass sie abschnittweise nicht dieser Funktion folgen. Bei diesen Abschnitten handelt es sich um Phasen, an welchen die zu diesem Zeitpunkt anliegende Netzspannung nicht ausreicht, um den an der Stromquelle eingestellten Strom fließen zu lassen. In dieser Phase muss der Strom daher stattdessen der Sinus Form der Netzspannung (301) folgen.

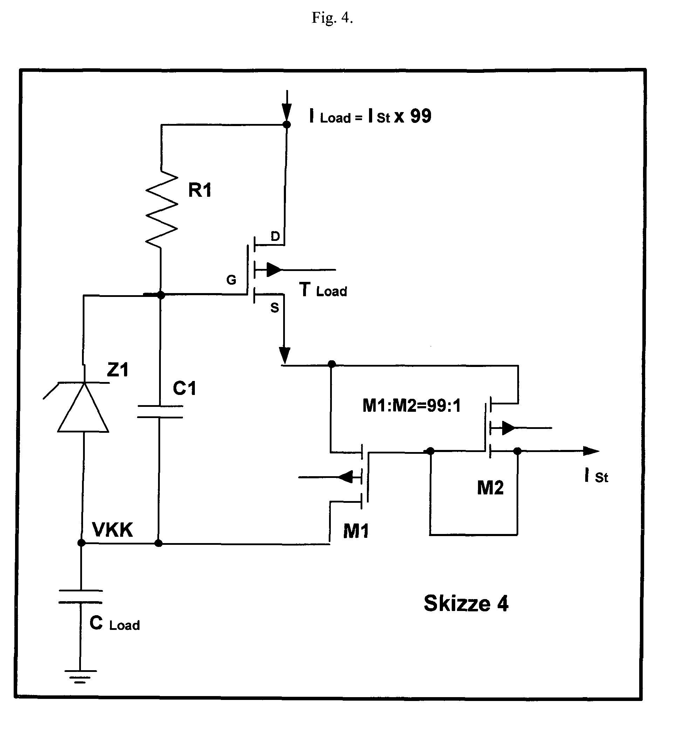

Auch diese Umschaltungen werden im Rahmen der vorgestellten Schaltung umgesetzt. Fig. 4 zeigt Details der als Stromspiegel aufgebauten Stromquelle CM als Schaltbild, die aus den Transistoren M1 und M2 gebildet wird. Es handelt sich vorliegend um einen so genannten "Stromspiegel", weil die Größen der beiden Transistoren M1 und M2 sich vorliegend um den Faktor 99 zu 1 unterscheiden. Wird daher an M2 ein $I_{st}$ von 1mA eingeprägt, fließen über M1 ca. 100 mA. Der Transistor $T_{Load}$ wird wie beschrieben in einer Gateschaltung betrieben. Die Gate wird über R1 und mit Z1 auf einer konstanten Spannung gehalten. Wenn kein Strom über M1 fließt, fällt praktisch die gesamte Eingangsspannung an $T_{Load}$ ab.

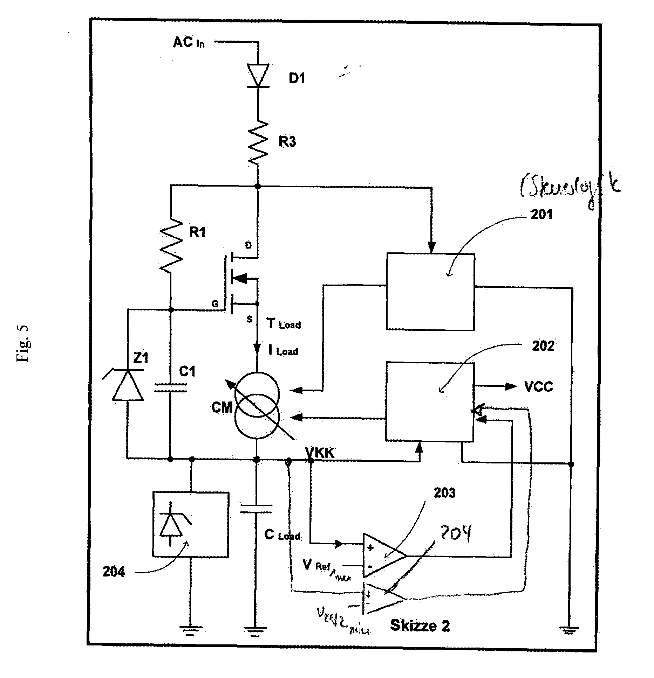

Fig. 5 zeigt die Schaltung von Fig. 2, wobei die Fig. 2 lediglich einen Komparator (203) zeigt, der nur die Maximalspannung überwacht. Fig. 5 hingegen zeigt zwei Komparatoren (203a, 203b). Wenn dann ein bestimmter maximaler Spannungswert überschritten ist, oder wenn ein minimaler Wert unterschritten ist, spricht einer dieser Komparatoren (203a, 203b) an. Ein Komparator (203a) für die maximal erlaubte Spannung und einen erster Komparator (203b) für die minimal erlaubte Spannung. Wenn ein minimaler Wert unterschritten ist, spricht ein zweiter Komparator (203b), an. Diese beiden Funktionen können natürlich auch in einem einzigen Gehäuse vereint sein, das dann eben zwei Komparatoren mit unterschiedlichen Funktionen und unterschiedlichen Wirkungen umfasst.

Dieser verhindert in beiden Fällen, sowohl, dass eine maximale Spannung überschritten wird, als auch dass die minimale Spannung unterschritten wird.

Die Überwachung sowohl der maximal zulässigen, als auch der minimal zulässigen Spannung hat zur Folge, dass nur geladen wird, wenn es wirklich nötig ist.


**Patentansprüche**

1. Elektronische Schaltung zur Versorgung von weiteren elektronischen Schaltungen welche zwischen Eingangsseite und Ausgangsseite eine Schaltung umfasst unter einem Zusammenwirken, von einer Ladekapazität ($C_{Load}$) mindestens einem Transistor ($T_{Load}$), eine Stromquelle (CM), einer Steuerungsschaltung (201, 202,), Vorwiderständen, Dioden, wobei zwischen dem in Basisschaltung betriebenen Transistor ($T_{Load}$) und der Eingangsspannung eine Diode D1 angeordnet ist und wobei die Sourceseite des Transistors ($T_{Load}$) mit der Stromquelle CM verbunden ist und die Stromquelle mit der Ladekapazität $C_{Load}$ verbunden ist, und wobei an der Ladekapazität ($C_{Load}$) eine geregelte Spannung bereitgestellt wird und wobei die Steuerschaltung (201, 202) die Stromquelle CM mit Regelinformationen versorgt und wobei die von der Stromquelle CM bereitgestellte Spannung mit Hilfe eines Komparators (203a, 203b) überwacht wird, wobei dieser Komparator (203a, 203b) sowohl anspricht, wenn ein maximaler Spannungswert überschritten ist, als auch wenn ein minimaler Spannungswert unterschritten ist und wobei diese Stromquelle CM, wenn die geregelte Spannung an der Ladekapazität $C_{Load}$ einen oberen Schwellwert überschreitet, diese Ladekapazität $C_{Load}$ zusammen mit dem Transistor ($T_{Load}$) mit Hilfe der Steuerschaltung ST1 abregelt, und wenn diese geregelte Spannung an der Ladekapazität $C_{Load}$ eine untere Schwelle unterschreitet, die Ladekapazität $C_{Load}$ auflädt.

2.   Elektronische Schaltung zur Energieversorgung nach Anspruch 1, wobei auf der Ausgangsseite der elektronischen Schaltung Spannungswerte bereitgestellt werden, die zum Betrieb von Halbleitern und/oder diskreten elektrischen Niedervolt-Schaltungen unmittelbar geeignet sind.

3.   Elektronische Schaltung zur Energieversorgung von elektronischen Schaltungen nach einem der zuvor genannten Ansprüche, wobei der Transistor (TLoad) Eingangsspannungen über einen einstellbaren Schwellwert von ca. 30 bis 80 Volt sperrt.

4.   Elektronische Schaltung zur Energieversorgung von Halbleitern nach einem der zuvor genannten Ansprüche, wobei die Ladekapazität eine Kapazität zwischen 1 und 100uF aufweist.

5.   Elektronische Schaltung zur Energieversorgung von elektronischen Schaltungen nach einem der zuvor genannten Ansprüche, wobei die Ladekapazität durch die positive Halbwelle der Spannungen unterhalb des Schwellwerts geladen wird.

6.   Elektronische Schaltung zur Energieversorgung von elektronischen Schaltungen nach einem der zuvor genannten Ansprüche, wobei die Stromquelle eine gesteuerte Stromquelle ist.

7.   Elektronische Schaltung zur Energieversorgung von Halbleitern nach einem der zuvor genannten Ansprüche, wobei die Spannung an der Ladekapazität durch eine Spannungs-Überwachungsschaltung gemessen wird und wobei im Fall, dass ein vorgegebener Wert überschritten ist, ein Komparator (203) anspricht, dessen Signalausgang die Stromquelle anspricht und bei welcher dann kein Strom durch den Transistor ($T_{Load}$) fließt und dadurch das der Transistor ($T_{Load}$) in Gateschaltung betrieben wird, der Transistor in einen nicht-leitenden Zustand übergeht.

8.   Elektronische Schaltung zur Energieversorgung von Halbleitern nach einem der zuvor genannten Ansprüche, wobei der Ladestrom in den Ladekondensator nach einer Anlaufzeit durch eine in einem eigenen $\sin^2$ Generator erzeugte $\sin^2$ Kurve gestaltet wird.

9.   Elektronische Schaltung zur Energieversorgung von Halbleitern nach einem der zuvor genannten Ansprüche, wobei die Stromquelle über mehr als eine eigene Steuerschaltung ansteuerbar ist, wobei eine erste Steuerung durch eine erste Steuerungsschaltung erfolgt, bevor der Betrieb mit Hilfe einer $\sin^2$ Kurvengestalt erfolgt und die zweite Steuerung nach einer definierten Zeit durch die zweite Steuerschaltung erfolgt, wenn der Betrieb mit Hilfe einer $\sin^2$ Kurvengestalt erfolgt.

10.  Elektronische Schaltung zur Energieversorgung von Halbleitern nach einem der zuvor genannten Ansprüche, wobei eine Überspannungsschutz-Schaltung geeignet ist, ab einem definierbaren maximalen Spannungspegel die Ladekapazität zu entladen.

11.  Chip umfassend mindestens eine elektronische Schaltung zur Energieversorgung von Halbleitern nach einem der zuvor genannten Ansprüche.

12.  Hausgerät, umfassend mindestens einen Chip und/oder eine elektronische Schaltung zur Energieversorgung von Halbleitern nach einem der zuvor genannten Ansprüche.

13.  Netzversorgung umfassend mindestens eine elektronische Schaltung und/oder mindestens einen Chip zur Energieversorgung von Halbleitern nach einem der zuvor genannten Ansprüche.

14.  Gebäude, umfassend mindestens eine Netzversorgung nach Anspruch 13 und/oder ein Hausgerät nach Anspruch 12; und/oder einen Chip nach Anspruch 11 und/oder eine elektronische Schaltung nach einem der Ansprüche 1 bis 10.

15.  Verwendung einer der zuvor genannten elektronischen Schaltungen, welche im Rahmen einer Spannungsumwandlung dazu dient, die EMV dieser Spannungsumwandlung zu reduzieren.

16.  Verfahren gelöst, umfassend die Schritte, dass beim Durchbruch der Sinuskurve durch die 0-Volt-Grenze von der negativen Halbwelle in die positive Halbwelle eine Stromquelle CM aufgeregelt und über diese Stromquelle eine Ladekapazität CLoad lädt und welches nach einer definierbaren Ladezeit eine definierbare maximale Spannung VRef erreicht und nach Erreichen dieser maximalen Spannung VRef den in der Stromquelle CM eingeprägten Strom bis auf 0 zurück führt und so lange sich der Netzsinus oberhalb von VRef befindet den in die Landekapazität fließenden Strom auf 0 hält und bei Unterschreiten einer ebenfalls definierbaren weiteren maximalen Spannung VRef* in der Stromquelle CM erneut ein Strom eingeprägt wird, wobei dieser Strom anschwillt und mit der fallenden Sinusspannung am Netz abnimmt und mit der Netzsinusspannung den Wert 0 erreicht.

17. Verfahren nach Anspruch 16, wobei in der Phase vom Anschalten des Netzteils bis zum Zeitpunkt in welchem alle Bauelemente innerhalb des Netzteils ihren Betriebszustand erreicht haben, in einem weiteren Schritt die Stromquelle CM durch einen ersten Regler gesteuert wird und nachdem alle Bauelemente innerhalb des Netzteils ihren Betriebszustand erreicht haben, die Stromquelle CM statt durch den ersten Regler durch einen zweiten Regler geregelt wird,

Fig. 1

Fig. 2

Skizze 2

Fig. 3

Fig. 4.

I Load = I St x 99

R1

D

G

T Load

S

Z1

C1

M1:M2=99:1

VKK

M2

I St

M1

C Load

Skizze 4

Fig. 5